# EUROPEAN PATENT SPECIFICATION

(11) **EP 0 854 118 B1**
(45) Date of publication and mention of the grant of the patent: **07.05.2003**
(21) Application number: 97100521.0
(22) Date of filing: 15.01.1997
(51) Int. Cl.: C03C 3/095, C03C 4/02, C03C 4/08

(54) **Ultraviolet- and infrared- absorbing glass**
Ultraviolett- und Infrarot-absorbierendes Glas
Verre absorbant les rayonnements ultraviolettes et infrarouges

(43) Date of publication of application: 22.07.1998
(73) Proprietor: NIPPON SHEET GLASS CO., LTD., Chuo-ku Osaka (JP)
(72) Inventor: Sakaguchi, Koichi, Nippon Sheet Glass Co., Ltd., Osaka-shi, Osaka (JP); Nagashima, Yukihito, Nippon Sheet Glass Co., Ltd., Osaka-shi, Osaka (JP); Kuroda, Isamu, Nippon Sheet Glass Co., Ltd., Osaka-shi, Osaka (JP); Yoshii, Shigekazu, Nippon Sheet Glass Co., Ltd., Osaka-shi, Osaka (JP)
(74) Representative: Hansen, Bernd, Dr. Dipl.-Chem.

(56) References cited:
- EP-A- 0 561 337
- EP-A- 0 653 387
- DE-A- 4 313 215
- US-A- 5 318 931
- PATENT ABSTRACTS OF JAPAN vol. 095, no. 003, 28 April 1995 & JP 06 345483 A (ASAHI GLASS CO LTD), 20 December 1994,
- PATENT ABSTRACTS OF JAPAN vol. 095, no. 003, 28 April 1995 & JP 06 345482 A (ASAHI GLASS CO LTD), 20 December 1994,

## Description

### FILED OF THE INVENTION

This invention relates to ultraviolet- and infrared-absorbing glass which has a bronze tint and is particularly excellent in ultraviolet-absorbing power.

### BACKGROUND OF THE INVENTION

In order to meet the demand for protection of interior trim of automobiles against deterioration, which has been increasing with the recent trend to luxury of the interior trim, and to reduce the load of air conditioning, glass having ultraviolet- and infrared-absorbing power (UV-and IR-absorbing power) has recently been proposed as window glass of automobiles.

For example, green-tinted glass having a relatively high Fe₂O₃ content to exhibit improved heat ray- and UV-absorbing power has been developed for use in automobiles.

The UV-absorbing power of glass having a bronze tint, on the other hand, can be improved by using Fe₂O₃ in a lesser amount than in the green-tinted glass in combination with CeO₂ and TiO₂. To cite an example, JP-A-6-40741 (the term "JP-A" as used herein means an "unexamined published Japanese patent application") discloses heat ray-absorbing glass having a bronze tint, which has a basic glass composition comprising 68 to 74 wt% of SiO₂, 0.1 to 3 wt% of Al₂O₃, 2 to 4.5 wt% of MgO, 8 to 11 wt% of CaO, 11.5 to 16 wt% of Na₂O, 0.5 to 3.0 wt% of K₂O, and 0.1 to 0.4 wt% of SO₃, the total amount of SiO₂ and Al₂O₃ being 68 to 74 wt%, the total amount of CaO and MgO being 11 to 15 wt%, and the total amount of Na₂O and K₂O being 12 to 17 wt%, and further contains, as coloring components, 0.13 to 0.55 wt%, in terms of Fe₂O₃, of total iron oxide, 0.2 to 0.6 wt% of CeO₂, 0.15 to 0.45 wt% of TiO₂, 0.3 to 14 ppm of CoO, and 5 to 20 ppm of Se. The rate of reduction (Fe²⁺/Fe³⁺) of the glass is 17 to 55%.

JP-A-6-345482 discloses UV-absorbing tinted glass, which has a brown tint and comprises 65 to 75 wt% of SiO₂, 0.1 to 5 wt% of Al₂O₃, 1 to 6 wt% of MgO, 5 to 15 wt% of CaO, 10 to 18 wt% of Na₂O, 0 to 5 wt% of K₂O, 0.05 to 1.0 wt% of SO₃, 0.2 to 1.5 wt% of CeO₂, 0 to 1.0 wt% of TiO₂, 0 to 0.0015 wt% of CoO, 0.0002 to 0.0012 wt% of Se, and 0.2 to 0.4 wt% of Fe₂O₃, in which 3 to 15 wt% of the total Fe is in the form of Fe²⁺.

EP-A-0 790 219, having priority, filing and publication dates respectively of 16 February 1996, 14 February 1997 and 20 August 1997, discloses an ultraviolet ray absorbing coloured glass which comprises 100 parts by weight of soda lime silicate glass as a base component and colouring components consisting essentially of from 0.12 to 0.7 part by weight of total iron as calculated as Fe₂O₃, from 0.2 to 2.0 parts by weight of total cerium as calculated as CeO₂, from 1.0 to 2.5 parts by weight of total titanium as calculated as TiO₂, from 0 to 0.01 part by weight of CoO and from 0.0001 to 0.02 part by weight of Se, and which has an ultraviolet ray transmittance of at most 10%, as stipulated in ISO-9050 and as calculated as of a thickness of 5mm, whereby the dominant wavelength measured by illuminant C is within a range of from 565 to 600 nm.

The above-mentioned conventional UV- and IR-absorbing glass owes its UV-absorbing characteristics to UV absorption by Fe₂O₃, CeO₂ and TiO₂ and interactions among them. However, in glass having a bronze tint owing to the color development of Se, since the Fe₂O₃ content must be relatively low in order to maintain the pink color formation of Se, it has been difficult to obtain high UV-absorbing power while retaining the bronze tint. That is, an increase in TiO₂ content tends to result in yellowing, and an increase in CeO₂ content does not always lead to an effective increase in UV-absorbing power depending on the oxidation-reduction balance of glass. The present invention has been made in the light of the above-described problems associated with the conventional techniques.

### SUMMARY OF THE INVENTION

An object of the present invention is to provide UV-and IR-absorbing glass which has a bronze tint and yet excellent UV-absorbing power.

Other objects and effects of the present invention will be apparent from the following description.

The present invention relates to, as a first embodiment, ultraviolet- and infrared-absorbing glass comprising:
as basic glass components,
   65 to 80% by weight of SiO₂,
   0 to 5% by weight of Aℓ₂O₃,
   0 to 10% by weight of MgO,
   5 to 15% by weight of CaO,
   10 to 18% by weight of Na₂O,
   0 to 5% by weight of K₂O,
   5 to 15% by weight in total of MgO and CaO,
   10 to 20% by weight in total of Na₂O and K₂O, and
   0 to 5% by weight of B₂O₃; and
as coloring components,
   0.25 to 0.45% by weight, in terms of Fe₂O₃, of total iron oxide (T-Fe₂O₃) having an FeO/T-Fe₂O₃ ratio, in terms of Fe₂O₃, of 15.5 to 25.0%,
   1.4 to 2.0% by weight of CeO₂,
   0 to 0.6% by weight of TiO₂,
   0 to 0.005% by weight of CoO, and
   0.0016 to 0.005% by weight of Se.

In a first preferred embodiment of the first embodiment of the present invention, the ultraviolet- and infrared-absorbing glass preferably comprises:
0.25 to 0.35% by weight, in terms of Fe₂O₃, of T-Fe₂O₃ having an FeO/T-Fe₂O₃ ratio, in terms of Fe₂O₃, of 15.5 to 25.0%, and
0 to 0.002% by weight of CoO.

In a second preferred embodiment of the first preferred embodiment of the present invention, the ultraviolet- and infrared-absorbing glass preferably comprises:
1.55 to 2.0% by weight of CeO₂, and
0 to 0.4% by weight of TiO₂.

The present invention relates to, as a second embodiment, ultraviolet- and infrared-absorbing glass comprising:
as basic glass components,
   65 to 80% by weight of SiO₂,
   0 to 5% by weight of Aℓ₂O₃,
   0 to 10% by weight of MgO,
   5 to 15% by weight of CaO,
   10 to 18% by weight of Na₂O,
   0 to 5% by weight of K₂O,
   5 to 15% by weight in total of MgO and CaO,
   10 to 20% by weight in total of Na₂O and K₂O, and
   0 to 5% by weight of B₂O₃; and
as coloring components,
   0.25 to 0.5% by weight, in terms of Fe₂O₃, of total iron oxide (T-Fe₂O₃) having an FeO/T-Fe₂O₃ ratio, in terms of Fe₂O₃, of 5.0 to 20.0%,
   1.4 to 2.0% by weight of CeO₂,
   0 to 0.4% by weight of TiO₂,
   0 to 0.002% by weight of CoO, and
   0.0016 to 0.005% by weight of Se.

In a preferred embodiment of the second embodiment of the present invention, the ultraviolet- and infrared-absorbing glass preferably comprises:
as coloring components,
   0.25 to 0.5% by weight, in terms of Fe₂O₃, of T-Fe₂O₃ having an FeO/T-Fe₂O₃ ratio, in terms of Fe₂O₃, of 5.0 to 20.0%,
   1.55 to 2.0% by weight of CeO₂,
   0 to 0.4% by weight of TiO₂,
   0 to 0.002% by weight of CoO, and
   0.0016 to 0.005% by weight of Se.

### DETAILED DESCRIPTION OF THE INVENTION

With the thickness being fixed at 4 mm, the UV- and IR-absorbing glass according to the first and second embodiments of the present invention preferably has a visible light transmission of 70% or more as measured in a wavelength region of 380 to 770 nm with the CIE standard illuminant A; a dominant wavelength of 574 to 580 nm and an excitation purity of less than 11% both as measured in a wavelength region of 380 to 770 nm with the CIE standard illuminant C; and a total solar energy transmission of less than 72% as measured in a wavelength region of 300 to 2100 nm. The glass also preferably has a total sunlight UV transmission of less than 12% as measured in a wavelength region of 297.5 to 377.5 nm according to ISO 9050. It is also preferred that the UV- and IR-absorbing glass preferably has, with a thickness of 4 mm, a UV transmission of less than 34% at a wavelength of 370 nm.

The grounds for limitations of the basic glass composition of the UV- and IR-absorbing glass according to the invention are explained below. In what follows, all the percents are given by weight.

SiO₂ is a main component forming the skeleton of glass. If its content is less than 65%, glass has reduced durability. If it exceeds 80%, the composition is difficult to melt.

Aℓ₂O₃ serves to improve durability of glass. If its content exceeds 5%, the composition is difficult to melt. A preferred Aℓ₂O₃ content is from 0.1 to 2%.

MgO and CaO both serve to improve durability of glass and to control the liquidus temperature and viscosity at the time of glass forming. If the MgO content exceeds 10%, the liquidus temperature rises. If the CaO content is less than 5% or higher than 15%, the liquidus temperature rises. If the total content of MgO and CaO is less than 5%, the resulting glass has reduced durability. If it exceeds 15%, the liquidus temperature rises.

Na₂O and K₂O are used as a glass melting accelerator. If the Na₂O content is less than 10%, or if the total content of Na₂O and K₂O is less than 10%, the effect of melting acceleration is weak. If Na₂O content exceeds 18%, or if the total content of Na₂O and K₂O exceeds 20%, durability is reduced. It is unfavorable that the K₂O exceeds 5% because it is more expensive than Na₂O.

While B₂O₃ is a component used for improvement of durability and also as a melting aid, it also functions to enhance UV absorption. If it exceeds 5.0%, exertion of the light transmission reducing effect would be extended over the visible region, and the glass tends to assume a yellow tint. Moreover, vaporization of B₂O₃ on forming would cause troubles. Accordingly, the upper limit of the B₂O₃ content should be 5.0%.

Iron oxide is present in glass in the form of Fe₂O₃ and FeO. The former Fe₂O₃ is a component serving to increase UV-absorbing power together with CeO₂ and TiO₂, while the latter FeO is a component serving to increase heat ray-absorbing power. Too small an Fe₂O₃ content is insufficient for obtaining satisfactory UV- and heat ray-absorbing power. Too high the content changes the developed color of Se from pink to brown, failing to obtain a bronze tint.

In the first embodiment of the invention, the total iron oxide (T-Fe₂O₃) content ranges from 0.25 to 0.45%, preferably 0.25 to 0.35%, in terms of Fe₂O₃. If the FeO/T-Fe₂O₃ ratio is too small, the FeO content is insufficient for obtaining desired heat ray-absorbing power, and the CeO₂ component hereinafter described is not reduced sufficiently, resulting in reduction in UV-absorbing power. If the FeO/T-Fe₂O₃ ratio is too large, the resulting glass assumes a strong brown tint, and vaporization of Se becomes considerable on melting. It has been found that high UV-absorbing power, a bronze tint, and moderate heat ray-absorbing power can be obtained in the first embodiment by setting the FeO/T-Fe₂O₃ ratio within a range of from 0.155 to 0.25. The amount of FeO as referred to above is in terms of Fe₂O₃.

CeO₂ is a component for enhancing UV absorption. It exists in glass in the form of Ce³⁺ or Ce⁴⁺. Showing weak absorption in the visible region, Ce³⁺ is more effective for UV absorption. As stated above, the CeO₂ content should range from 1.4 to 2.0% under the oxidation-reduction balance satisfying 0.155≤FeO/T-Fe₂O₃≤0.25 as in the first embodiment. If it is less than 0.8%, the UV-absorbing effect is insufficient. If it exceeds 2.0%, the absorption in the shorter wavelength side of the visible region is so strong that the glass will have a yellow tint, failing to have a desired visible transmission and a desired dominant wavelength. In order to substantially prevent glass from acquiring a yellow tint and to obtain further improved UV-absorbing power, the CeO₂ content is 1.4 to 2.0%, preferably 1.55 to 2.0% in the first embodiment.

In the second embodiment of the invention, the total iron oxide content in terms of Fe₂O₃ ranges from 0.25 to 0.5%. In the second embodiment, to secure the same level of heat ray-absorbing power as obtained in the first embodiment, FeO should be used in the same amount as in the glass of the first embodiment. The total iron oxide content of the second embodiment is slightly higher so that the FeO/T-Fe₂O₃ ratio should be set lower, i.e., 0.05≤FeO/T-Fe₂O₃≤0.20. It has been found that high UV-absorbing power, a bronze tint, and moderate heat ray-absorbing power can be obtained through this constitution. Under the oxidation-reduction balance satisfying 0.05≤FeO/T-Fe₂O₃≤0.20 as in the second embodiment, the CeO₂ content ranges from 1.4 to 2.0%, preferably 1.55 to 2.0%, as described above.

TiO₂ is a component for increasing UV-absorbing power through the mutual action especially with FeO. If the TiO₂ content exceeds 1.0%, the glass will acquire a yellow tint. In the first embodiment the TiO₂ content is 0 to 0.6%, particularly 0 to 0.4%. In the second embodiment the TiO₂ content is 0 to 0.4%.

CoO is a component which develops a bronze color in the presence of Se. If the CoO content exceeds 0.005%, the visible transmission is reduced. In the first embodiment a preferred CoO content is 0 to 0.002%. In the second embodiment the CoO content is 0 to 0.002 %.

Se develops a pink tint and cooperates with CoO which has a complementary color to the pink tint to provide a bronze tint. The Se content is 0.0016 to 0.005% by wt. If the Se content is less than 0.0005%, a desired color cannot be developed. If it exceeds 0.005%, the visible transmission is reduced.

As long as the bronze tint as aimed at is not impaired, glass having the composition according to the present invention may further contain one or more other components, such as coloring components, e.g., NiO, MnO, V₂O₅, MoO₃, etc., and SnO₂ as a reducing agent, in a total amount of up to 1%.

The present invention will now be illustrated in greater detail by way of Examples, but the present invention is not construed as being limited thereto.

### EXAMPLES 1 TO 11

A typical soda-lime-silica glass batch was appropriately compounded with ferric oxide, titanium oxide, cerium oxide, cobalt oxide, sodium selenite, and a carbonaceous reducing agent, and the resulting batch was heat-melted at 1500°C for 4 hours in an electric furnace. The molten glass was cast on a stainless steel plate and slowly cooled to room temperature to obtain a glass plate having a thickness of about 6 mm. The glass plate was polished to prepare a 4 mm thick glass sample for evaluating optical characteristics.

A visible light transmission (YA) measured with the CIE standard illuminant A, a total solar energy transmission (TG), a UV transmission (T_{UV}) specified by ISO 9050, and a dominant wavelength (Dw) and an excitation purity (Pe) measured with the CIE standard illuminant C were obtained. As an additional measure for UV transmission, a UV transmission at 370 nm (T₃₇₀), at which the change in transmission sensitively appears in the course of the steep rise from the absorption end of the transmission curve, was measured.

In Table 1 below are shown the T-Fe₂O₃ content, FeO/T-Fe₂O₃ ratio, CeO₂ content, TiO₂ content, CoO content, Se content, and optical characteristics of the samples. All the contents are expressed in terms of percent by weight.

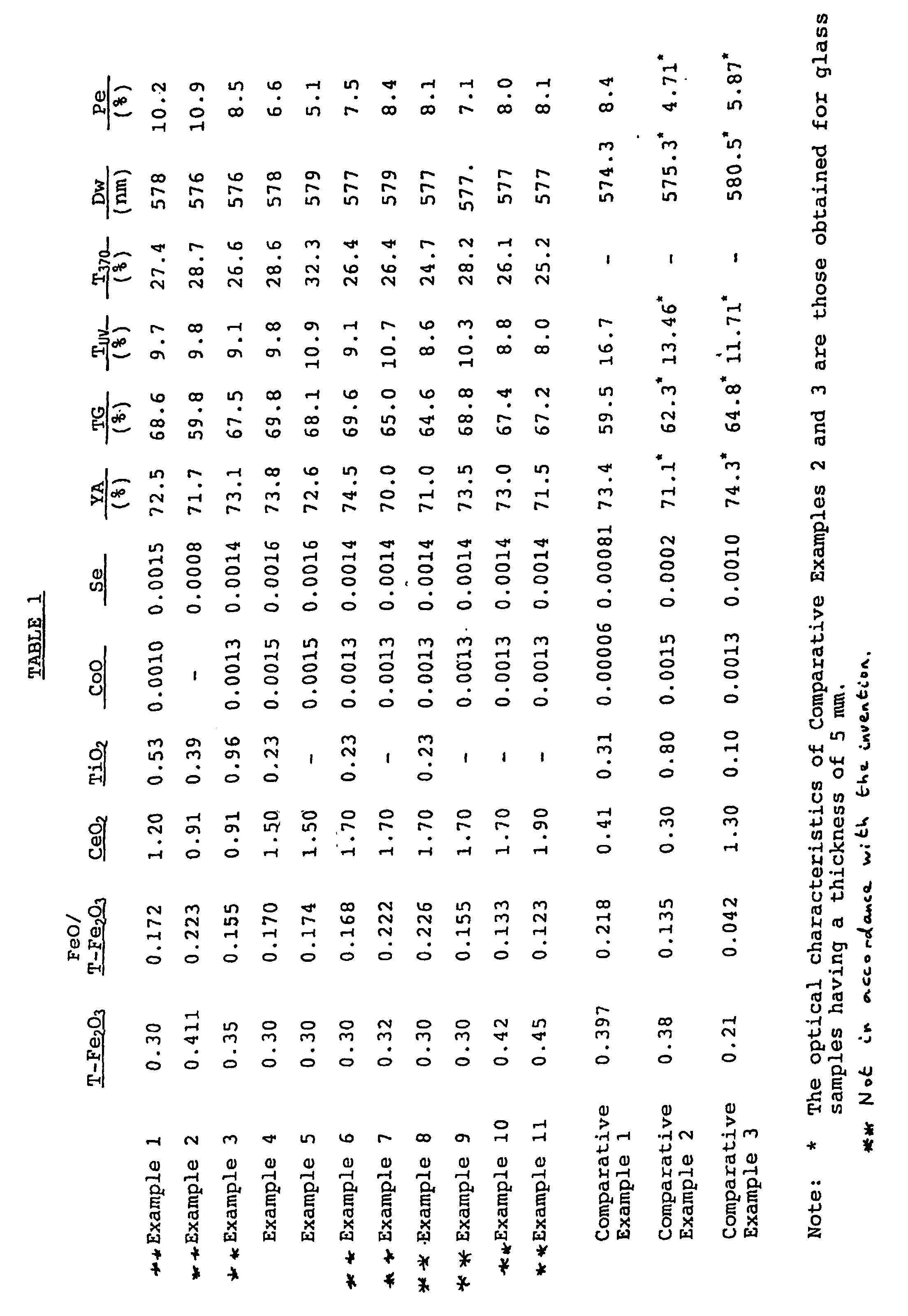

Examples 4 and 5 fall within the scope of the present invention. As is apparent from Table 1, all the samples of Examples 1 to 11 having a thickness of 4 mm had a visible light transmission (YA) of 70% or more as measured with the illuminant A, a dominant wavelength (Dw) of 57.4 to 580 nm and an excitation purity (Pe) of less than 11% as measured with the illuminant C, a total solar energy transmission (TG) of less than 72%, and a UV transmission (T_{UV}, specified in ISO 9050) of less than 12%.

In Examples 4 and 5 the TiO₂ content was lower than those of the samples of Examples 1 to 3, not falling within the scope of the claims. It is seen that these samples had an excitation purity of less than 7% and exhibited a favorable bronze tint with an unfavorable yellow tint suppressed.

Examples 6 to 9, not falling within the scope of the claims, had a lower TiO₂ content and also a higher CeO₂ content than the glass of Examples 1 to 3, not falling within the scope of the claims. As a result, the samples exhibited not only a favorable bronze tint with a yellow tint suppressed but a reduced transmission at 370 nm (T₃₇₀), namely, excellent UV-absorbing power.

The samples of Examples 10 and 11, not falling within the scope of the claims, exhibited not only a favorable bronze tint with a yellow tint suppressed but also a reduced transmission at 370 nm (T₃₇₀), namely, excellent UV-absorbing power.

Accordingly, the glass of the Examples 4 and 5 is especially expected to exhibit an excellent deterioration preventive effect on interior trim when used as window glass of vehicles, such as automobiles, or buildings.

### COMPARATIVE EXAMPLES 1 TO 3

In Table 1 are also shown Comparative Examples 1 to 3 each having a glass composition out of the scope of the present invention. Comparative Example 1 shows one of the compositions given in the working examples of JP-A-6-40741, previously cited as a conventional technique, and its characteristics. Comparative Examples 2 and 3 show two examples of the compositions given in the working examples of JP-A-6-345482, previously cited as conventional techniques, and their characteristics. The optical characteristics of Comparative Examples 2 and 3 are those obtained for glass samples having a thickness of 5 mm.

As is apparent from Table 1, the glass of Comparative Examples 1 to 3, not falling within the scope of the claims, have a higher UV transmission (T_{UV}) than the samples according to the invention, indicating inferiority in UV-absorbing power.

As has been fully described, the present invention makes it possible to provide UV- and IR-absorbing glass having excellent UV-absorbing power.

Further, because of the high UV-absorbing power and a bronze tint, the glass of the invention is highly effective in prevention of interior trim or decoration from deterioration or browning when applied as glass panes of automobiles or buildings.

While the invention has been described in detail and with reference to specific examples thereof, it will be apparent to one skilled in the art that various changes and modifications can be made therein without departing from the scope thereof.

## Claims

1. Ultraviolet- and infrared-absorbing glass comprising :
as basic glass components,
65 to 80% by weight of SiO₂,
0 to 5% by weight of Aℓ₂O₃,
0 to 10% by weight of MgO,
5 to 15% by weight of CaO,
10 to 18% by weight of Na₂O,
0 to 5% by weight of K₂O,
5 to 15% by weight in total of MgO and CaO,
10 to 20% by weight in total of Na₂O and K₂O, and
0 to 5% by weight of B₂O₃; and
as coloring components,
0.25 to 0.45% by weight, in terms of Fe₂O₃, of total iron oxide (T-Fe₂O₃) having an FeO/T-Fe₂O₃ ratio, in terms of Fe₂O₃, of 15.5 to 25.0%,
1.4 to 2.0% by weight of CeO₂,
0 to 0.6% by weight of TiO₂,
0 to 0.005% by weight of CoO, and
0.0016 to 0.005% by weight of Se.

2. Ultraviolet- and infrared-absorbing glass as claimed in claim 1, wherein said glass comprises:
0.25 to 0.35% by weight, in terms of Fe₂O₃, of T-Fe₂O₃ having an FeO/T-Fe₂O₃ ratio, in terms of Fe₂O₃, of 15.5 to 25.0%, and
0 to 0.002% by weight of CoO.

3. Ultraviolet- and infrared-absorbing glass as claimed in claim 2, wherein said glass comprises:
1.55 to 2.0% by weight of CeO₂, and
0 to 0.4% by weight of TiO₂.

4. Ultraviolet- and infrared-absorbing glass comprising:
as basic glass components,
65 to 80% by weight of SiO₂,
0 to 5% by weight of Aℓ₂O₃,
0 to 10% by weight of MgO,
5 to 15% by weight of CaO,
10 to 18% by weight of Na₂O,
0 to 5% by weight of K₂O,
5 to 15% by weight in total of MgO and CaO,
10 to 20% by weight in total of Na₂O and K₂O, and
0 to 5% by weight of B₂O₃; and
as coloring components,
0.25 to 0.5% by weight, in terms of Fe₂O₃, of total iron oxide (T-Fe₂O₃) having an FeO/T-Fe₂O₃ ratio, in terms of Fe₂O₃, of 5.0 to 20.0%,
1.4 to 2.0% by weight of CeO₂,
0 to 0.4% by weight of TiO₂,
0 to 0.002% by weight of CoO, and
0.0016 to 0.005% by weight of Se.

5. Ultraviolet- and infrared-absorbing glass as claimed in claim 4, wherein said glass comprises:
as coloring components,
0.25 to 0.5% by weight, in terms of Fe₂O₃, of T-Fe₂O₃ having an FeO/T-Fe₂O₃ ratio, in terms of Fe₂O₃, of 5.0 to 20.0%,
1.55 to 2.0% by weight of CeO₂,
0 to 0.4% by weight of TiO₂,
0 to 0.002% by weight of CoO, and
0.0016 to 0.005% by weight of Se.

6. Ultraviolet- and infrared-absorbing glass as claimed in claim 1, wherein said glass with a thickness of 4 mm has a visible light transmission of 70% or more as measured with the CIE standard illuminant A.

7. Ultraviolet- and infrared-absorbing glass as claimed in claim 4, wherein said glass with a thickness of 4 mm has a visible light transmission of 70% or more as measured with the CIE standard illuminant A.

8. Ultraviolet- and infrared-absorbing glass as claimed in claim 1, wherein said glass with a thickness of 4 mm has a total solar energy transmission of less than 72%.

9. Ultraviolet- and infrared-absorbing glass as claimed in claim 4, wherein said glass with a thickness of 4 mm has a total solar energy transmission of less than 72%.

10. Ultraviolet- and infrared-absorbing glass as claimed in claim 1, wherein said glass with a thickness of 4 mm has a dominant wavelength of 574 to 580 nm as measured with the CIE standard illuminant C.

11. Ultraviolet- and infrared-absorbing glass as claimed in claim 4, wherein said glass with a thickness of 4 mm has a dominant wavelength of 574 to 580 nm as measured with the CIE standard illuminant C.

12. Ultraviolet- and infrared-absorbing glass as claimed in claim 1, wherein said glass with a thickness of 4 mm has an excitation purity of less than 11% as measured with the CIE standard illuminant C.

13. Ultraviolet- and infrared-absorbing glass as claimed in claim 4, wherein said glass with a thickness of 4 mm has an excitation purity of less than 11% as measured with the CIE standard illuminant C.

14. Ultraviolet- and infrared-absorbing glass as claimed in claim 1, wherein said glass with a thickness of 4 mm has an ultraviolet transmission of less than 12% as measured according to ISO 9050.

15. Ultraviolet- and infrared-absorbing glass as claimed in claim 4, wherein said glass with a thickness of 4 mm has an ultraviolet transmission of less than 12% as measured according to ISO 9050.

16. Ultraviolet- and infrared-absorbing glass as claimed in claim 1, wherein said glass with a thickness of 4 mm has an ultraviolet transmission of less than 34% at a wavelength of 370 nm.

17. Ultraviolet- and infrared-absorbing glass as claimed in claim 4, wherein said glass with a thickness of 4 mm has an ultraviolet transmission of less than 34% at a wavelength of 370 nm.

## Patentansprüche

1. Ultraviolett- und Infrarot-absorbierendes Glas, umfassend:
als Glas-Grundkomponenten:
65 bis 80 Gew.-% SiO₂,
0 bis 5 Gew.-% Al₂O₃,
0 bis 10 Gew.-% MgO,
5 bis 15 Gew.-% CaO,
10 bis 18 Gew.-% Na₂O,
0 bis 5 Gew.-% K₂O,
insgesamt 5 bis 15 Gew.-% MgO und CaO,
insgesamt 10 bis 20 Gew.-% Na₂O und K₂O, und
0 bis 5 bew B₂O₃; und
als Farbgebungskomponenten:
0,25 bis 0,45 Gew.-% (als Fe₂O₃) Gesamteisenoxid (T-Fe₂O₃) mit einem FeO/T-Fe₂O₃-Verhältnis (als Fe₂O₃) von 15,5 bis 25,0 %,
1,4 bis 2,0 Gew.-% CeO₂,
0 bis 0,6 Gew.-% TiO₂,
0 bis 0,005 Gew.-% CoO und
0,0016 bis 0,005 Gew.-% Se.

2. Ultraviolett- und Infrarot-absorbierendes Glas gemäß Anspruch 1, worin das Glas umfaßt:
0,25 bis 0,35 Gew.-% (als Fe₂O₃) T-Fe₂O₃ mit einem FeO/T-Fe₂O₃-Verhältnis (als Fe₂O₃) von 15,5 bis 25,0 % und
0 bis 0,002 Gew.-% CoO.

3. Ultraviolett- und Infrarot-absorbierendes Glas gemäß Anspruch 2, worin das Glas umfaßt:
1,55 bis 2,0 Gew.-% CeO₂ und
0 bis 0,4 Gew.-% TiO₂.

4. Ultraviolett- und Infrarot-absorbierendes Glas, umfassend:
als Glas-Grundkomponenten:
65 bis 80 Gew.-% SiO₂,
0 bis 5 Gew.-% Al₂O₃,
0 bis 10 Gew.-% MgO,
5 bis 15 Gew.-% CaO,
10 bis 18 Gew.-% Na₂O,
0 bis 5 Gew.-% K₂O,
insgesamt 5 bis 15 Gew.-% MgO und CaO,
insgesamt 10 bis 20 Gew.-% Na₂O und K₂O, und
0 bis 5 Gew.-% B₂O₃; und
als Farbgebungskomponenten:
0,25 bis 0,5 Gew.-% (als Fe₂O₃) Gesamteisenoxid (T-Fe₂O₃) mit einem FeO/T-Fe₂O₃-Verhältnis (als Fe₂O₃) von 5,0 bis 20,0 %,
1,4 bis 2,0 Gew.-% CeO₂,
0 bis 0,4 Gew.-% TiO₂,
0 bis 0,002 Gew.-% CoO und
0,0016 bis 0,005 Gew.-% Se.

5. Ultraviolett- und Infrarot-absorbierendes Glas gemäß Anspruch 4, worin das Glas umfaßt:
als Farbgebungskomponenten:
0,25 bis 0,5 Gew.-% (als Fe₂O₃) T-Fe₂O₃ mit einem FeO/T-Fe₂O₃-Verhältnis (als Fe₂O₃) von 5,0 bis 20,0 %, 1,55 bis 2,0 Gew.-% CeO₂,
0 bis 0,4 Gew.-% TiO₂,
0 bis 0,002 Gew.-% CoO und
0,0016 bis 0,005 Gew.-% Se.

6. Ultraviolett- und Infrarot-absorbierendes Glas gemäß Anspruch 1, worin das Glas mit einer Dicke von 4 mm eine Durchlässigkeit für sichtbares Licht von 70 % oder mehr gemäß Messung mit der CIE-Standard-Lichtquelle A hat.

7. Ultraviolett- und Infrarot-absorbierendes Glas gemäß Anspruch 4, worin das Glas mit einer Dicke von 4 mm eine Durchlässigkeit für sichtbares Licht von 70 % oder mehr gemäß Messung mit der CIE-Standard-Lichtquelle A hat.

8. Ultraviolett- und Infrarot-absorbierendes Glas gemäß Anspruch 1, worin das Glas mit einer Dicke von 4 mm eine Solarenergie-Gesamtdurchlässigkeit von weniger als 72 % hat.

9. Ultraviolett- und Infrarot-absorbierendes Glas gemäß Anspruch 4, worin das Glas mit einer Dicke von 4 mm eine Solarenergie-Gesamtdurchlässigkeit von weniger als 72 % hat.

10. Ultraviolett- und Infrarot-absorbierendes Glas gemäß Anspruch 1, worin das Glas mit einer Dicke von 4 mm eine Dominant-Wellenlänge von 574 bis 580 nm gemäß Messung mit der CIE-Standard-Lichtquelle C hat.

11. Ultraviolett- und Infrarot-absorbierendes Glas gemäß Anspruch 4, worin das Glas mit einer Dicke von 4 mm eine Dominant-Wellenlänge von 574 bis 580 nm gemäß Messung mit der CIE-Standard-Lichtquelle C hat.

12. Ultraviolett- und Infrarot-absorbierendes Glas gemäß Anspruch 1, worin das Glas mit einer Dicke von 4 mm eine Erregungsreinheit von weniger als 11 % gemäß Messung mit der CIE-Standard-Lichtquelle C hat.

13. Ultraviolett- und Infrarot-absorbierendes Glas gemäß Anspruch 4, worin das Glas mit einer Dicke von 4 mm eine Erregungsreinheit von weniger als 11 % gemäß Messung mit der CIE-Standard-Lichtquelle C hat.

14. Ultraviolett- und Infrarot-absorbierendes Glas gemäß Anspruch 1, worin das Glas mit einer Dicke von 4 mm eine Ultraviolett-Duchlässigkeit von weniger als 12 % gemäß Messung nach ISO 9050 hat.

15. Ultraviolett- und Infrarot-absorbierendes Glas gemäß Anspruch 4, worin das Glas mit einer Dicke von 4 mm eine Ultraviolett-Duchlässigkeit von weniger als 12 % gemäß Messung nach ISO 9050 hat.

16. Ultraviolett- und Infrarot-absorbierendes Glas gemäß Anspruch 1, worin das Glas mit einer Dicke von 4 mm eine Ultraviolett-Durchlässigkeit von weniger als 34 % bei einer Wellenlänge von 370 nm hat.

17. Ultraviolett- und Infrarot-absorbierendes Glas gemäß Anspruch 4, worin das Glas mit einer Dicke von 4 mm eine Ultraviolett-Durchlässigkeit von weniger als 34 % bei einer Wellenlänge von 370 nm hat.

## Revendications

1. Verre absorbant les rayonnements ultraviolets et infrarouges comprenant :
5 comme composants de verre fondamentaux :
65 à 80 % en poids de SiO₂,
0 à 5 % en poids de Aℓ₂O₃,
0 à 10 % en poids de MgO,
5 à 15 % en poids de CaO,
10 à 18 % en poids de Na₂O,
0 à 5 % en poids de K₂O,
5 à 15 % en poids du total de MgO et CaO,
10 à 20 % en poids du total de Na₂O et K₂O, et
0 à 5 % en poids de B₂O₃; et
comme composants colorants,
0,25 à 0,45 % en poids, en termes de Fe₂O₃,
d'oxyde de fer total (T-Fe₂O₃) ayant un rapport FeO/T-Fe₂O₃, en termes de Fe₂O₃, de 15,5 à 25,0 %,
1,4 à 2,0 % en poids de CeO₂,
0 à 0,6 % en poids de TiO₂,
0 à 0,005 % en poids de CoO, et
0,0016 à 0,005 % en poids de Se.

2. Verre absorbant les rayonnements ultraviolets et infrarouges selon la revendication 1, dans lequel ledit verre comprend :
0,25 à 0,35 % en poids, en termes de Fe₂O₃, de T-Fe₂O₃ ayant un rapport de FeO/T-Fe₂O₃, en termes de Fe₂O₃, de 15,5 à 25,0 %, et
0 à 0,002 % en poids de CoO.

3. Verre absorbant les rayonnements ultraviolets et infrarouges selon la revendication 2, dans lequel ledit verre comprend :
1,55 à 2,0 % en poids de CeO₂, et
0 à 0,4 % en poids de TiO₂.

4. Verre absorbant les rayonnements ultraviolets et infrarouges comprenant :
comme composants de verre fondamentaux,
65 à 80 % en poids de SiO₂,
0 à 5 % en poids de Aℓ₂O₃,
0 à 10 % en poids de MgO,
5 à 15 % en poids de CaO,
10 à 18 % en poids de Na₂O,
0 à 5 % en poids de K₂O,
5 à 15 % en poids du total de MgO et CaO,
10 à 20 % en poids du total de Na₂O et K₂O, et
0 à 5 % en poids de B₂O₃ ; et
comme composants colorants,
0,25 à 0,5 % en poids, en termes de Fe₂O₃, d'oxyde de fer total (T-Fe₂O₃) ayant un rapport FeO/T-Fe₂O₃, en termes de Fe₂O₃, de 5,0 à 20,0 %,
1,4 à 2,0 % en poids de CeO₂,
0 à 0,4 % en poids de TiO₂,
0 à 0,002 % en poids de CoO, et
0,0016 à 0,005 % en poids de Se.

5. Verre absorbant les rayonnements ultraviolets et infrarouges selon la revendication 4, dans lequel ledit verre comprend :
comme composants colorants
0,25 à 0,5 % en poids, en termes de Fe₂O₃, de T-Fe₂O₃ ayant un rapport de FeO/T-Fe₂O₃, en termes de Fe₂O₃, de 5,0 à 20,0 %,
1,55 à 2,0 % en poids de CeO₂,
0 à 0,4 % en poids de TiO₂,
0 à 0,002 % en poids de CoO, et
0,0016 à 0,005 % en poids de Se.

6. Verre absorbant les rayonnements ultraviolets et infrarouges selon la revendication 1, dans lequel ledit verre ayant une épaisseur de 4 mm possède un facteur de transmission de lumière visible de 70 % ou plus, quand il est mesuré avec l'illuminant standard CIE A.

7. Verre absorbant les rayonnements ultraviolets et infrarouges selon la revendication 4, dans lequel ledit verre ayant une épaisseur de 4 mm possède un facteur de transmission de lumière visible de 70 % ou plus, quand il est mesuré avec l'illuminant standard CIE A.

8. Verre absorbant les rayonnements ultraviolets et infrarouges selon la revendication 1, dans lequel ledit verre ayant une épaisseur de 4 mm possède un facteur de transmission d'énergie solaire totale, inférieur à 72 %.

9. Verre absorbant les rayonnements ultraviolets et infrarouges selon la revendication 4, dans lequel ledit verre ayant une épaisseur de 4 mm possède un facteur de transmission d'énergie solaire totale, inférieur à 72 %.

10. Verre absorbant les rayonnements ultraviolets et infrarouges selon la revendication 1, dans lequel ledit verre ayant une épaisseur de 4 mm possède une longueur d'onde dominante de 574 à 580 nm quand elle est mesurée avec l'illuminant standard CIE C.

11. Verre absorbant les rayonnements ultraviolets et infrarouges selon la revendication 4, dans lequel ledit verre ayant une épaisseur de 4 mm possède une longueur d'onde dominante de 574 à 580 nm quand elle est mesurée avec l'illuminant standard CIE C.

12. Verre absorbant les rayonnements ultraviolets et infrarouges selon la revendication 1, dans lequel ledit verre ayant une épaisseur de 4 mm possède une pureté d'excitations inférieure à 11 % quand elle est mesurée avec l'illuminant standard CIE C.

13. Verre absorbant les rayonnements ultraviolets et infrarouges selon la revendication 4, dans lequel ledit verre ayant une épaisseur de 4 mm possède une pureté d'excitation inférieure à 11 % quand elle est mesurée avec l'illuminant standard CIE C.

14. Verre absorbant les rayonnements ultraviolets et infrarouges selon la revendication 1, dans lequel ledit verre ayant une épaisseur de 4 mm possède un facteur de transmission ultraviolet inférieur à 12 % quand il est mesuré selon la norme ISO 9050.

15. Verre absorbant les rayonnements ultraviolets et infrarouges selon la revendication 4, dans lequel ledit verre ayant une épaisseur de 4 mm possède un facteur de transmission ultraviolet inférieur à 12 % quand il est mesuré selon la norme ISO 9050.

16. Verre absorbant les rayonnements ultraviolets et infrarouges selon la revendication 1, dans lequel ledit verre ayant une épaisseur de 4 mm possède un facteur de transmission ultraviolet inférieur à 34 % selon une longueur d'onde de 370 nm.

17. Verre absorbant les rayonnements ultraviolets et infrarouges selon la revendication 4, dans lequel ledit verre ayant une épaisseur de 4 mm possède un facteur de transmission ultraviolet inférieur à 34 % selon une longueur d'onde de 370 nm.
